# EUROPEAN PATENT SPECIFICATION

(11) **EP 1 835 701 B1**
(45) Date of publication and mention of the grant of the patent: **15.10.2008**
(21) Application number: 06009679.9
(22) Date of filing: 10.05.2006
(51) Int. Cl.: H04L 29/12, H04M 7/00, H04L 29/06

(54) **System for uniquely identifying and reaching VoIP users**
System zur eindeutigen Identifizierung und Erreichen von VoIP Nutzern
Système pour identifier de manière unique et joindre des utilisateurs VoIP

(30) Priority: 15.03.2006 US 782891 P
(43) Date of publication of application: 19.09.2007
(73) Proprietor: Nero AG, 76307 Karlsbad (DE)
(72) Inventor: Lesser, Richard, 76227 Karlsruhe (DE)
(74) Representative: Zinkler, Franz

(56) References cited:
- US-A- 5 684 951
- US-A1- 2002 004 831
- ROSENBERG ET AL: "RFC 3261: SIP: Session Initiation Protocol" IETF REQUEST FOR COMMENTS, June 2002 (2002-06), pages 56-66, XP002323877
- HOFFMAN INTERNET MAIL CONSORTIUM L MASINTER XEROX CORPORATION J ZAWINSKI NETSCAPE COMMUNICATIONS P: "The mailto URL scheme; rfc2368.txt" IETF STANDARD, INTERNET ENGINEERING TASK FORCE, IETF, CH, July 1998 (1998-07), XP015008152 ISSN: 0000-0003
- VAHA-SIPILA A: "RFC 2806: URLs for Telephone calls" NETWORK WORKING GROUP REQUEST FOR COMMENTS, April 2000 (2000-04), pages 1-21, XP000864166

## Description

### Field of the invention

The present invention generally relates to a VoIP (Voice over Internet Protocol) system and, more particularly, to setting up a user account for using the VoIP system and initiating a call from an originating user to a destination user.

### Background of the invention

Voice over IP (Internet Protocol) is a technique yielding convergence of pure voice and data networks. With VoIP new applications in the field of telephone services are possible. Compared to classical circuit-switched telephone connections via a PSTN (Public Switched Telephone Network), VoIP solutions yield tremendous advantages in costs for companies as well as private persons. This is due to the fact, that, by using IP in a telephony infrastructure, much hardware such as switches can be eliminated, and existing computers and software can be used instead, reducing costs. However, VoIP data is latency-sensitive as it is the case for any conversational speech data. Therefore it is desirable that VoIP data shall not be unduly delayed in transmission between people conversing which each other.

To connect an originating VoIP device with a destination VoIP device, an auxiliary IP-based protocol known as Session Initiation Protocol (SIP) is used. The SIP protocol is described in detail in Rosenberg et al. "RFC 3261: SIP: Session Initiation Protocol", IETF Request for Comments, June 2002. This document describes Session Initiation Protocol (SIP), an application-layer control (signaling) protocol for creating, modifying, and terminating sessions with one or more participants. These sessions include Internet telephone calls, multimedia distribution, and multimedia conferences.

Using a protocol such as SIP, a VoIP device is associated with an IP address and a unique identifying alphanumeric SIP address. A VoIP service provider is generally operating a server that manages an IP address corresponding to a called party's telephone number used by the VoIP service, and allowing a calling user to make a voice call over the Internet without separately managing the IP address corresponding to the called party's telephone number. Such a server is commonly called a SIP server and hence functions as a directory of end-points and their associated IP addresses and alphanumeric SIP addresses. Accordingly, to participate in an IP-based communication such as VoIP, a VoIP device must register its IP address with a SIP server. When an originating device requests a connection to an IP-based destination device, the SIP server either provides the destination IP address to the originating device, or it establishes a connection with the destination device and than acts as a proxy for the originating and destination devices, respectively.

In case an originating device belonging to a certain VoIP service system wishes to place a call to a destination device belonging to the same VoIP service system, a SIP server that is associated with the VoIP service system knows both related IP addresses and consequently establishes an IP-based connection between the two devices. On the other hand, if the destination device is not in the same VoIP service system as the originating device, its address will not appear in the SIP-server's data base, and therefore the SIP server consequently forwards the call request to other associated SIP servers until the destination address is located or until the call request has timed out.

Standard VoIP telephony calls dedicated to destinations within the same VoIP service system are connected to the destination party using Internet protocol routing techniques with the assistance of a SIP-server, as noted above. VoIP telephone calls dedicated to destinations outside of the originating VoIP service system to destinations on the PSTN require a format conversion at the boundary of the originating VoIP packet system and the PSTN. Therefore, a VoIP gateway, a device well-known in the art, is needed to convert between VoIP and PSTN formats. In order to perform this conversion, the VoIP gateway requires knowledge of the voice encoding and voice call signaling used within the originating VoIP system.

VoIP uses a Real-time Transport Protocol (RTP) in order to support that data packets containing the speech data arrive on time, in addition to its original IP function. Using the public network (Internet) can hardly guaranty for a quality of service (QoS). Using any private network managed by a personal company or an Internet telephone service provider may provide a more excellent service.

A Session Initiation Protocol is a standard for VoIP connection setup. The SIP is an application layer control protocol that sets, modifies and terminates a session in a client-server manner and is based on a very simple text. The SIP operates in such a transaction processing method that a client sends a service request message to a server, the server processes it and then sends a response message back to the client. Users that communicate using the SIP generally use a Uniform Resource Identifier (URI) of a "user@host.domain" format, similar to an email address, as an identifier between the respective users. Uniform Resource Identifiers are described in detail in P. Hoffman et al., "RFC 2368 - The mailto URL scheme", IETF Standard, Internet Engineering Task Force, IETF, CH, July 1998. This document defines the format of Uniform Resource Locators (URL) for designating electronic mail addresses. Further, the document from A. Vaha-Sipila et al. , "RFC 2806 - URLs for Telephone Calls", Network Working Group Request for Comments, April 2000, specifies URL schemes "tel", "fax" and "modem" for specifying the location of a terminal in the phone network and the connection types (modes of operation) that can be used to connect to that entity. This specification covers voice calls (normal phone calls, answering machines and voice messaging systems), facsimile (telefax) calls and data calls, both for POTS and digital/mobile subscribers.

The SIP provides two connection methods from an originating to a destination party, i.e. via a proxy server and directly. A calling party will request a call to a destination party by sending an invite-message using an addressing manner suitable for the SIP.

Addresses used in the SIP can be largely classified into three addresses. First, the combination of a network name and a host name used by a user with an ID (Identification) used for the user to log in may be used as the SIP address. Second, an IP address itself may be used as a SIP address. Third, an email address or a DNS (Domain Name System) name used in an existing homepage may be used as the SIP address.

VoIP call-setup is classified into several methods according to specific situations. Calling party and called party are identified by SIP addresses. To establish a call the calling party searches for the related SIP server and sends a request, i.e. an invite message, to the SIP server. The SIP server can handle this request twofold:

As a proxy server the SIP server accepts the request for connection and tries to localize the requested user to invite him. In case the destination party confirms the request for connection the proxy server routes the confirmation further to the calling party.

The second alternative is to redirect the request for a connection by obtaining potential addresses of the destination party and redirecting them to the calling client. The calling client now can send new invitation to the obtained IP addresses of the destination party.

As described before, a VoIP user can currently be uniquely identified by a uniform resource identifier ("user@host.domain") and with that can be reached via the SIP protocol.

To provide a possibility to the said VoIP user to be reached by a different VoIP user, the administrator of a SIP server has to set up a name-server configuration in the Internet to point all SIP requests for the VoIP user to the SIP server (host.domain), and then direct all incoming calls to the VoIP user registered with this SIP server.

US 5684951 describes a method and system for performing user authorization in a multi-user computer system. The method has particular application to the multi-user internet protocol. Within the system, an application contains a list of registered users. For each registered user, the application stores a user identification, an email address, and a database containing each authorized IP address for that user. When a user requests access to the application over the multi-user system, the application requires the user to input a user identification value and, simultaneously, the application accesses the user's current IP address over the multi-user system. The application attempts to validate the user identification, and if valid, the application examines its database to determine if the user is authorized for its current IP address. If so, access is permitted. If the user identification is valid but the current IP address is not authorized, the application determines a validation key ("key") based on the user identification and the current IP address. The pseudo unique key is then forwarded via the email protocol to the user's known email address. The user then is required to enter that key into the application to authorized the current IP address. Security is provided because (1) given a user identification, which can be stolen, the unauthorized user also needs to access the application using an authorized IP address and (2) email is used to transmit the keys to the user to a known user email address.

US2002004831 describes an authentication or authorization system to facilitate electronic transactions which uses simultaneous or substantially simultaneous communications on two different networks to verify a user's identity. When a user logs onto a site, via the internet, a telephone number, either pre-stored or obtained in real time from the visitor, where the visitor can be called essentially immediately is used to set up, via the switched telephone network another communication link. Where the user has multiple communication links available, the telephone call is automatically placed via the authentication or authorization software simultaneously while the user is on-line. In the event that the user has only a single communication link, that individual will have to log off temporarily for purposes of receiving the telephone call. Confirmatory information is provided via the internet to the user. The automatically placed telephone call requests that the user feed back this confirmatory information for verification purposes. The telephone number which is being called is adjacent to the user's internet terminal. The user's response, via the telephone network, can be compared to the originally transmitted confirmatory information to determine whether the authentication or authorization process should go forward.

However, in case an administrator is not setting up a name-server configuration in the Internet to point all SIP requests for the VoIP user to the SIP server, or there is no server available for that, the VoIP user cannot be reached this way. In this case the SIP address is useless and the user is not reachable through such an address. This is a big disadvantage.

### Summary of the invention

A preferred embodiment of the present invention is providing a method for initializing a connection between an originating user and a destination user, comprising receiving a request from an originating user to connect a destination user, the request including the telephone number of the destination user, accessing a data base to check, whether the data base has an account stored for the destination user, wherein the searched user account of the destination user has the existing telephone number of the destination user within the account as part of the account, which is to be used for identifying the user in case of a call for the user, identifying the destination user by comparing a part of the account having stored a telephone number of the destination user received from the originating user, and, in case the account of the destination user is not found in the data base, using the received telephone number of the destination user to establish a call to the destination user via a PSTN, in case the account of the destination user is found in the data base, sending a message to the destination user based on the account for the identified user and receiving information from the destination user, whether the destination user is available.

Another preferred embodiment of the present invention is providing an apparatus for initializing a connection between an originating user and a destination user, the apparatus comprising means for receiving a request from an originating user to connect a destination user, the request including the telephone number of the destination user, means for accessing a data base to check, whether the data base has an account stored for the destination user, wherein the searched user account of the destination user has the existing telephone number of the destination user within the account as part of the account, which is to be used for identifying the user in case of a call for the user, means for identifying the destination user by comparing a part of the account having stored a telephone number of the destination user received from the originating user, and means for, in case the account of the destination user is not found in the data base, using the received telephone number of the destination user to establish a call to the destination user via a PSTN, and means for, in case the account of the destination user is found in the data base, sending a message to the destination user based on the account for the identified user and receiving information from the destination user, whether the destination user is available.

Yet a further embodiment of the present invention is providing a method for initializing a connection between an originating user and a destination user, comprising receiving a request from an originating user to connect a destination user, the request including an existing email address of the destination user, accessing a data base to check, whether the data base has an account stored for the destination user, wherein the searched user account of the destination user has the existing email address of the destination user within the account as part of the account, which is to be used for identifying the user in case of a call for the user, identifying the destination user by comparing a part of the account having stored an email address of the destination user received from the originating user, and, in case the account of the destination user is not found in the data base, forming an identifier for a session initialization protocol by concatenating the existing email address of the destination user with a part identifying a second server by using an "@" sign to divide a first part and a second part of the identifier for a session initialization protocol, accessing a data base of the second server to check, whether the second server has stored an account for the destination user having stored the email address of the destination user, and, in case an account for the destination user is found in the data base of the second server, using a session initialization protocol to establish a call between the originating user and the destination user.

Another embodiment of the present invention is providing an apparatus for initializing a connection between an originating user and a destination user, the apparatus comprising means for receiving a request from an originating user to connect a destination user, the request including an existing email address of the destination user, means for accessing a data base to check, whether the data base has an account stored for the destination user, wherein the searched user account of the destination user has the existing email address of the destination user within the account as part of the account, which is to be used for identifying the user in case of a call for the user, means for identifying the destination user by comparing a part of the account having stored an email address of the destination user received from the originating user, and means for, in case the account of the destination user is not found in the data base, forming an identifier for a session initialization protocol by concatenating the existing email address of the destination user with a part identifying a second server by using an "@" sign to divide a first part and a second part of the identifier for a session initialization protocol, means for accessing a data base of the second server to check, whether the second server has stored an account for the destination user having stored the email address of the destination user, and, in case an account for the destination user is found in the data base of the second server, means for using a session initialization protocol to establish a call between the originating user and the destination user.

It is an advantage of preferred embodiments of the present invention to provide a VoIP system where the user can be reached by one of his existing PSTN phone numbers or at least parts thereof so that no confusion between VoIP numbers and PSTN telephone numbers exists. PSTN phone numbers are typically easier to handle when using a classical hardware phone in combination with a VoIP client according to embodiments of the present invention, since a hardware phone usually only accepts numbers to be typed in as input.

It is another advantage of preferred embodiments of the present invention to provide a secure and easy method of uniquely identifying and reaching VoIP users, by providing identification of users with existing email addresses or at least parts thereof of the users and/or provide identification of users with existing telephone numbers or at least parts thereof of the users.

It is hence another advantage of preferred embodiments of the present invention to provide a backup system for other SIP servers belonging to other VoIP systems where the user may by already registered, hence guaranteeing for a higher availability for the user.

### Brief description of the drawings

A more complete appreciation of the invention, and many of the attendant advantages thereof, will be readily apparent as the same becomes better understood by reference to the following detailed description when considered in conjunction with the accompanying drawings, in which alike reference symbols indicate the same or similar components, wherein:
- Fig. 1: is a diagram illustrating the authentication of a user having a certain email address at a central server;
- Fig. 2: is a diagram illustrating the authentication procedure of a user providing a telephone number to a central server;
- Fig. 3: is a schematic view illustrating a database within a central server;
- Fig. 4: is a flow chart illustrating the initialization of a connection between an originating user and a destination user, wherein the originating user uses an email address the destination user has an identifier;
- Fig. 5: is a flow chart illustrating the initialization of a connection between an originating user and a destination user, wherein the originating user uses a telephone number of the destination user as an identifier.

### Detailed description of the invention

Hereinafter, preferred embodiments of the present invention will be described with reference to the accompanying drawings.

If it is decided that in describing the present invention below, detailed description on related known functions or a configuration makes the gist of the present invention to be unclear unnecessarily, such a detailed description will be omitted. Terms described below are terms defined in view of their functions in the present invention. The definitions above may be varied according to user's intention and practice and should be determined based on general contents of this disclosure.

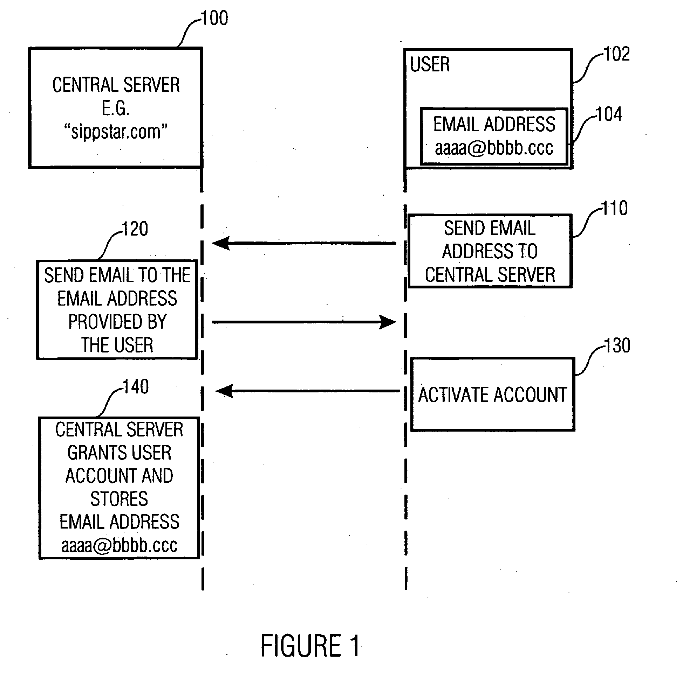

Fig. 1 shows a diagram illustrating an authentication procedure for setting up an account for using a voice service according to the present invention. For the authentication procedure a central server 100 (e.g. "sippstar.com") is required. Furthermore, a user 102 having an existing email address 104 (e.g. "aaaa@bbbb.ccc") who wants to register with the central server 100 is depicted.

In case the user 102 wants to set up an account for using a voice service at the central server 100 the user 102 has to provide his email address 104 to the central server 100 in a first step 110. The provision of the user's email address 104 to the central server 100 can e.g. be achieved via sending an email from the user 102 to the central server 100. In a second step 120 the central server 100 is sending an email to the user 102 requesting the user 102 to provide authentication information using a user's email address 104. Thereby the authentication information could be provided by the user 102 by sending an email to the server 100 or by accessing an authentication web-site in the world-wide-web provided by the central server. In a third step 130 the user is activating his account by providing the required authentication information to the central server 100. Finally, in a fourth step 140 the central server 100 is authenticating the user 102 using the authentication information received from the user 102 to obtain a pass or a fail result of the authentication for the user 102. In case of a pass result for the user 102 the central server 100 is creating the user account with a user account data base by storing the existing email address 104 of the user 102 or at least parts thereof within the account as a part of the account which is to be used for identifying the user 102 in case of a voice call for the user 102.

After the authentication procedure depicted in Fig. 1 the user 102 is uniquely identified by his email address 104. In case the central server 100 obtains a call request for the user 102 the call can now be directed to a VoIP client of the user 102 because the user 102 can be uniquely identified by the server 100 through his email address 104.

It is, therefore, an advantage of a preferred embodiment of the present invention to provide a VoIP system where the user 102 can be reached through the central server 100 using his favorite SIP address "user@host.domain" (being the same as his email address) and not having to install the server 100 on his own.

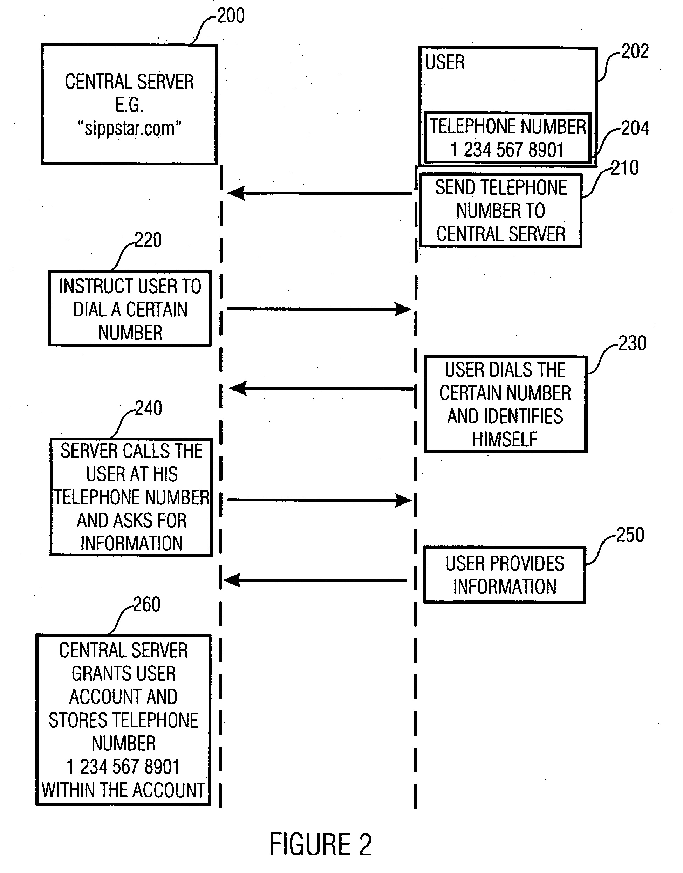

Fig. 2 illustrates a authentication situation, in which the user 202 has an existing telephone number 204 (e.g. "+1 234 567 8901") for a PSTN which is to be registered at the central server 200. The telephone number 204 might contain a country code (e.g. "1"), an area code (e.g. "234"), a city code (e.g. "567") and a user specific number (e.g. "8901"). The "+" represents the country code (international access code) or prefix, e.g. (011) when calling from the USA. Another example for an international telephone number could be "+49 89 12345678", where "49" is the country code, "89" is the city or area code and "12345678" is the user specific number.

In order to set up an account for using a voice service together with an existing telephone number 204 of the user the user 202 has to provide his existing telephone number 204 to a central server 200 in a first step 210. In a second step 220 of this authentication procedure the central server 200 is instructing the user 202 to dial a certain telephone number provided by the central server 200 to the user 202. In a further step 230 the user 202 dials the telephone number provided by the central server 200 and identifies himself in an identification process. In a next step 240 the central server 200 initiates a call to the user 202 using the telephone number 204 provided by the user 202 where the user 202 is asked for additional authentication information. After the user has provided this additional authentication information in a next step 250 the central server 200 grants the account only in case of pass result for the user 202 by storing the existing telephone number 204 of the user 202 or at least parts thereof within the user account as part of the account which is to be used for identifying the user 202 in case of a call for the user 202.

It is, therefore, another advantage of a preferred embodiment of the present invention to provide a VoIP system where the user 202 can be reached by one of his existing PSTN phone numbers 204 so that no confusion between VoIP numbers and PSTN telephone numbers exists.

In another preferred embodiment of the present invention the registration request could be received from a provider entity having the right to provide a telephone number to a user, e.g. a telephone company. Likewise the registration request could be received from a provider entity having the right to provide an email address to a user, e.g. an email provider. In another case the registration request could be received from an authorized entity being authorized by a provider entity, e.g. a third party company having bought rights to use the infrastructure from a telephone company and therefore being able to offer telephone services to end-users. An authentication of the provider entity or the authorized entity before the creation of a user account could be realized e.g. by using dedicated data lines to the central server where PINs (Personal Identification Numbers) or other secret authentication information are exchanged, hence circumventing additional email or telephone traffic between the central server and the provider entity or the authorized entity.

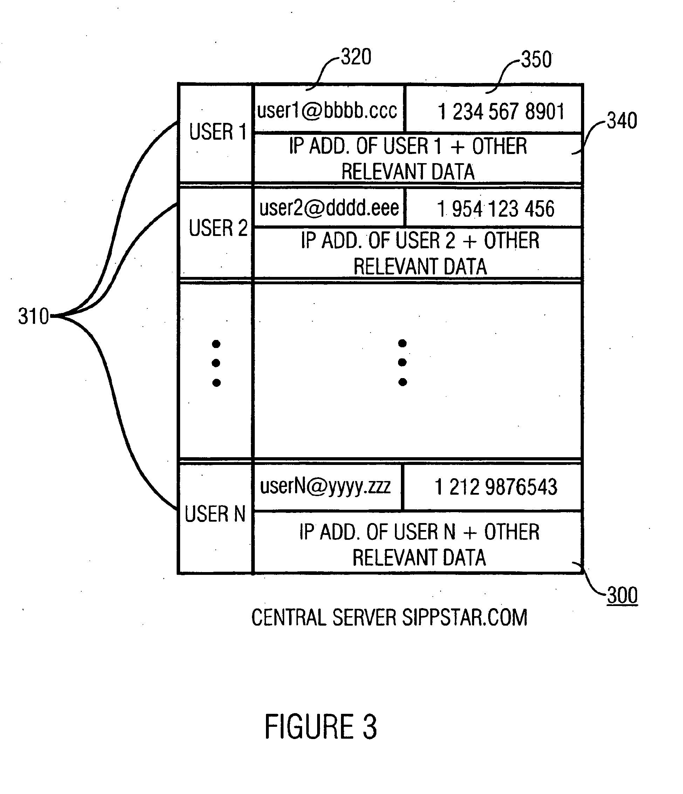

Fig. 3 is a schematic view of a user-account data base 300 which is located in a central server ("sippstar.com") of a VoIP service system.

The user-account data base 300 comprises a plurality of accounts 310 for a plurality of users. Each of the user accounts 310 is subdivided into a plurality of user relevant data fields. For the sake of simplicity a user account 310 depicted in Fig. 3 is subdivided in a data field 320 comprising an existing email address or at least parts thereof of a specific user, in a data field 330 comprising an existing telephone number or at least parts thereof of the specific user and in a data field 340 containing the IP address of the specific user and other relevant information to set up a VoIP call. Without loss of generality the account 310 could comprise more data fields to store user relevant data.

In case a new user account 310 is created within the user account data base 300 the step of creating the user account includes a step of storing a user IP number in the data field 340 in association with the user's email address which is stored in the data field 320 and/or the telephone number which is stored in data field 330. Thereby the email address is stored as a true copy of the user's existing email address, the true copy including an "@" sign dividing a first part and a second part of the email address. The first part of the email address comprises a user identifier and the second part of the email address includes a host name and a domain identifier separated by a "." sign. Further, the step of creating the user account 310 can include a step of storing a specific user number of a user's telephone number having a general user code and a specific user code in data field 330. Additional information different from a country code or the general user code might be also stored in data field 330 identifying a region or a large entity to which the user belongs to. Also a telephone number of the user comprising a user-specific code and a general user code could be stored in data field 330.

For each user account 310 of the user account data base 300 a data field 340 containing the IP address of the specific user and other relevant information to set up a VoIP call is required. The current IP address of the specific user is obtained each time the user newly registers with the central server "sippstar.com".

In summary, the plurality of user accounts 310 comprising data fields for email addresses 320, data fields for telephone numbers 330, and data fields for IP addresses 340 associated with the specific users, can be seen as single look-up table entries to offer a look-up table having a plurality of entries for different users.

It is, therefore, another advantage of a preferred embodiment to provide a secure and easy method of uniquely identifying and reaching VoIP users, by providing identification of users with existing email addresses of the users and/or provide identification of users with existing telephone numbers of the users.

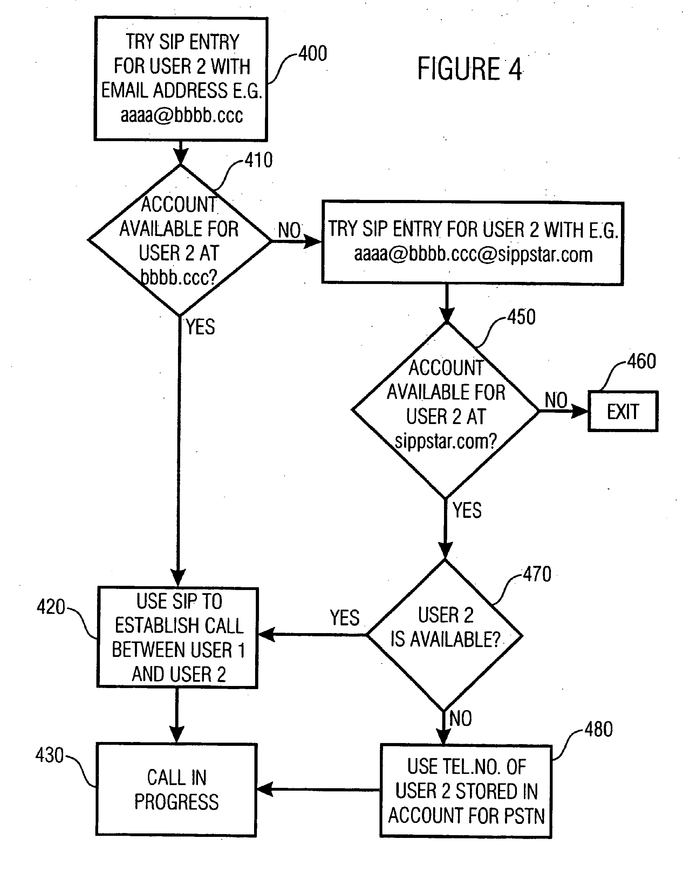

Fig. 4 illustrates a flow chart describing a situation, in which a first user having a first user client wishes to call a second user by using the email address (e.g. "aaaa@bbbb.ccc") of the second user.

According to a preferred embodiment of the inventive method a user client of a first user uses an existing email address "aaaa@bbbb.ccc" of the second user in a first step 400 as an identifier for the second user for a SIP in order to initiate a VoIP call from the first user to the second user. Preferably, a VoIP client of the first user checks, whether a server of a provider "bbbb.ccc" already offers a VoIP communication between the first user and the second user. In the first step 400 the first user tries to establish a connection to the server "bbbb.ccc" in order to have this server check whether it has an SIP entry for the second user to be called with his existing email address "aaaa@bbbb.ccc". This search for the destination user to be called is done by the server "bbbb.ccc" in a second step 410 and comprises the first user receiving a message from the server "bbbb.ccc" indicating whether the session with the second user can be initiated. In case the server "bbbb.ccc" finds an SIP-entry for the second user which is to be called it uses a SIP to establish a call between the first user and the second user in a third step 420. If the step 420 using the SIP has been successful then a call between the first user and the second user is set up in a last step 430.

However, in case the search for the second user at the server "bbbb.ccc" is not successful in step 410, the user client of the first user forms another SIP identifier by concatenating the existing email address "aaaa@bbbb.ccc" of the second user with a part identifying a central server "sippstar.com" by using an "@" sign dividing a first part "aaaa@bbbb.ccc" and a second part "sippstar.com" of the identifier for a SIP. This is done in step 440. Hence, step 440 includes a step of addressing the server "sippstar.com" by concatenating at least a part of the email address "aaaa@bbbb.ccc" and a part identifying the server "sippstar.com" with an "@" sign dividing a first part and a second part of an identifier for a SIP. The first part of the identifier for the SIP includes a true copy of the existing email address, the true copy of the email address including an "@" sign dividing a first part and a second part of the email address and the second part of the identifier for a session initiation protocol includes a host name "sippstar" and a domain identifier "com" divided by a "." sign.

In a next step 450 the central server "sippstar.com" checks whether it has stored an account comprising an IP address for the second user having the email address "aaaa@bbbb.ccc". In case the central server finds an account for the second user by a table look-up in its database, it checks in step 470 whether the second user is available under the IP address stored in the second user's account. In case this table look-up is successful and the central server is able to locate the second user at the stored IP address it uses a SIP to establish a call between the calling user and the destination user in step 420, which has already been described previously. As previously, the call between the originating user and the destination user is in progress in step 430 if this Session Initiation Protocol has been successful.

Referring to step 480 which will take place if step 470 has not been successful, i.e. in case no IP address is stored for the destination user or the destination user cannot be located under the stored IP address in step 470, the central server "sippstar.com" will try to initiate a call via the Public Switched Telephone Network (PSTN) by using a telephone number of the second user stored within the destination user's account as part of the account, which is to be used for identifying the second user in case of a call for the second user to connect to a PSTN. For this purpose a so-called gateway is used to transfer the VoIP data packets into a suitable format for the PSTN. In case step 480 is successful a call between the originating user and the second user will be in progress as previously described for step 430.

It is hence another advantage of a preferred embodiment of the present invention to provide a backup system for SIP servers of distinct VoIP systems where the user may be already registered, hence guaranteeing for a higher reliability for the user.

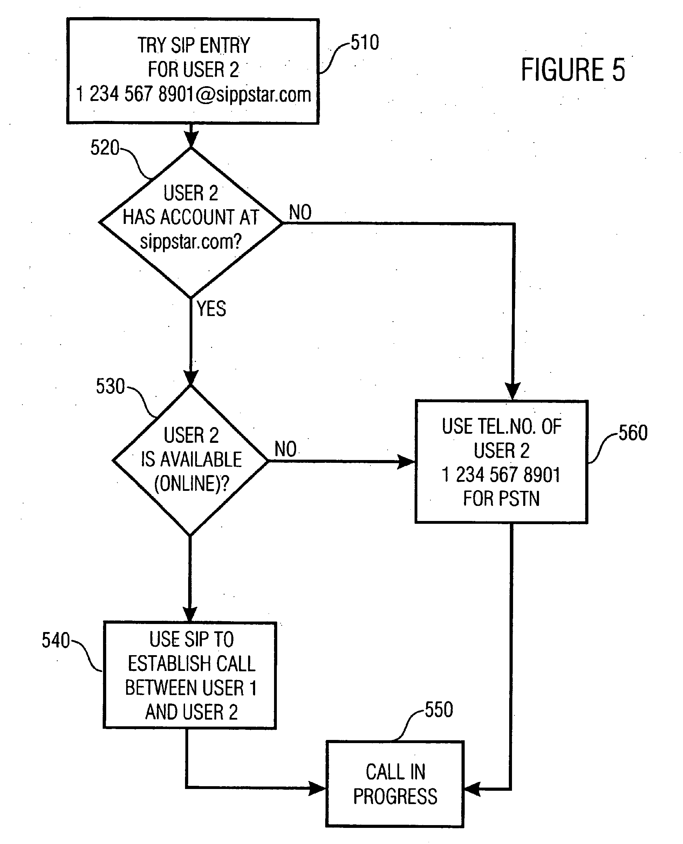

Fig. 5 shows another flow chart of a preferred embodiment of the inventive method. A procedure is shown, in which a first user wishes to have a VoIP connection to a second user. In comparison to the above described preferred embodiment the second user here is identified by a telephone number or at least parts thereof as part of an identifier for a SIP.

In a first step 510 the user client of the first user tries a SIP-entry for the second user including a telephone number of the second user, e.g. "+1 234 567 8901" concatenated with a part, e.g. "sippstar.com", identifying the central server with an "@"-sign. I.e. the step 510 of sending at least a part of a telephone number to the server "sippstar.com" includes the step of addressing the server "sippstar.com" by concatenating at least a part of the telephone number "+1 234 567 8901" and a part identifying the server "sippstar.com" with an "@"-sign dividing a first part and a second part of an identifier for a SIP. The first part of the identifier for a SIP includes a telephone number having a general user code comprising e.g. a country code "1", an area code "234", a city code "567" and a specific user code "8901" and the second part of the identifier for the SIP includes a server name "sippstar" and a domain identifier "com" divided by a "." sign.

In a second step 520 the central server "sippstar.com" checks by a table look-up in an account data-base, whether it has an account stored for the second user. The user account of the second user comprises the existing email address and/or the existing telephone number or at least parts thereof of the second user within the account as part of the account, which is to be used for identifying the second user in case of a call for the second user. In case this table look-up is successful by identifying the second user by comparing a part of the account having stored at least part of an email address or part of a telephone number of the second user and at least part of the email address or telephone number received from the first user, the central server checks whether the second user is available by applying the IP address stored in the account as part of the account of the second user and sending a message to the second user based on the IP address of the identified second user. This is done in step 530 of the depicted flow chart. In case the second user is available under the stored IP address the central server "sippstar.com" can use a SIP to establish a call between the first user and the second user in step 540. In case of success of the SIP of step 540 a VoIP-call is set up between the calling user and the second user in step 550.

In case the central server "sippstar.com" has an account for the second user but there is no IP address stored in the user account or the second user is not available under the stored IP address, the central server will use the telephone number given in step 510 as part of the SIP-identifier in a step 560 to establish a call via the Public Switch Telephone Network. For this purpose a gateway will be used in order to translate the VoIP packet data in a format suitable for PSTN. If step 560 is successful a call between the calling user and the second user can be set up in step 550, as described previously.

The central server according to the described embodiments of the present invention could be dedicated to a VoIP system of a company, provided to the company by a third party. This could e.g. be the case for a proprietary VoIP system within the company, since the company might not want to use a public SIP server because of security or reliability issues.
According to other embodiments of the present invention the central server could also be dedicated to a VoIP system within a user group, wherein the user group might be a worldwide group.

Depending on certain implementation requirements of the inventive methods, the inventive methods can be implemented in hardware or in software. The implementation can be performed using a digital storage medium, in particular a disk, DVD or a CD having electronically readable control signals stored thereon; which cooperate with a programmable computer system or by downloading the software program via a data net such as the Internet such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Method for initializing a connection between an originating user and a destination user, comprising:
receiving a request from an originating user to connect a destination user, the request including the telephone number of the destination user;
accessing a data base (300) to check, whether the data base (300) has an account (310) stored for the destination user, wherein the searched user account (310) of the destination user has the existing telephone number (204) of the destination user within the account (310) as part (330) of the account, which is to be used for identifying the user (102; 202) in case of a call for the user (102; 202);
identifying the destination user by comparing the part of the account (310) having stored the telephone number (204) of the destination user and the telephone number of the destination user received from the originating user; and
in case the account (310) of the destination user is not found in the data base (300), using the received telephone number (204) of the destination user to establish a call to the destination user via a PSTN;
in case the account (310) of the destination user is found in the data base (300), sending a message to the destination user based on the account for the identified user and receiving information from the destination user, whether the destination user is available.

2. Method according to claim 1, in which receiving the telephone number (204) comprises receiving information comprising a concatenation of the telephone number (204) and a part identifying a server (100; 200) with an "@"-sign dividing a first part and a second part of an identifier for a session initiation protocol.

3. Method according to claim 2, wherein the first part of the identifier for a session initiation protocol includes a telephone number (204) having a general user code and a specific user code and the second part of the identifier for a session initiation protocol includes a server (100; 200) name and a domain identifier divided by a "." sign.

4. Method according to one of claims 1 to 3, wherein the step of sending a message to the destination user is based on an IP address of the destination user stored in the account (310) of the destination user as part (340) of the account.

5. Method according to one of the preceding claims, wherein in case the information from the destination user indicates that the destination user is not available, the received telephone number (204) of the destination user is used to establish a call to the destination user via a PSTN.

6. Method according to one of claims 1 to 3, wherein in case the information from the destination user indicates that the destination user is available, the received telephone number (204) of the destination user is used as an identifier for a session initiation protocol with the destination user.

7. Computer program having a program code causing a computer to perform the method in accordance with one of the preceding claims, when the computer program runs on the computer.

8. Apparatus for initializing a connection between an originating user and a destination user, the apparatus comprising:
means for receiving a request from an originating user to connect a destination user, the request including the telephone number of the destination user;
means for accessing a data base (300) to check, whether the data base (300) has an account (310) stored for the destination user, wherein the searched user account (310) of the destination user has the existing telephone number (204) of the destination user within the account (310) as part (330) of the account, which is to be used for identifying the user (102; 202) in case of a call for the user (102; 202);
means for identifying the destination user by comparing the part of the account (310) having stored the telephone number (204) of the destination user and the telephone number of the destination user received from the originating user;
means for, in case the account (310) of the destination user is not found in the data base (300), using the received telephone number (204) of the destination user to establish a call to the destination user via a PSTN;
means for, in case the account (310) of the destination user is found in the data base (300), sending a message to the destination user based on the account for the identified user and receiving information from the destination user, whether the destination user is available.

9. Apparatus according to claim 8, wherein the means of sending a message to the destination user uses an IP address of the destination user stored in the account (310) of the destination user as part (340) of the account.

10. Apparatus according to claim 8 or 9, comprising means for, in case the information from the destination user indicates that the destination user is not available, establishing a call to the destination user via a PSTN with the received telephone number (204) of the destination user.

11. Apparatus according to claim 8, comprising means for, in case the information from the destination user indicates that the destination user is available, the using the received telephone number (204) of the destination as an identifier for a session initiation protocol with the destination user.

12. Method for initializing a connection between an originating user and a destination user, comprising:
receiving a request from an originating user to connect a destination user, the request including an existing email address (104) of the destination user;
accessing a data base (300) to check, whether the data base (300) has an account (310) stored for the destination user, wherein the searched user account (310) of the destination user has the existing email address (104) of the destination user within the account (310) as part (330) of the account, which is to be used for identifying the user (102; 202) in case of a call for the user (102; 202);
identifying the destination user by comparing the part of the account (310) having stored the email address of the destination user and the email address of the destination user received from the originating user; and
in case the account (310) of the destination user is not found in the data base (300),
forming an identifier for a session initialization protocol by concatenating the existing email address (104) of the destination user with a part identifying a second server by using an "@" sign to divide a first part and a second part of the identifier for a session initialization protocol;
accessing a data base of the second server to check, whether the second server has stored an account for the destination user having stored the email address of the destination user; and
in case an account for the destination user is found in the data base of the second server,
using a session initialization protocol to establish a call between the originating user and the destination user.

13. Apparatus for initializing a connection between an originating user and a destination user, the apparatus comprising:
means for receiving a request from an originating user to connect a destination user, the request including an existing email address (104) of the destination user;
means for accessing a data base (300) to check, whether the data base (300) has an account (310) stored for the destination user, wherein the searched user account (310) of the destination user has the existing email address (104) of the destination user within the account (310) as part (330) of the account, which is to be used for identifying the user (102; 202) in case of a call for the user (102; 202);
means for identifying the destination user by comparing the part of the account (310) having stored the email address (204) of the destination user and the email address of the destination user received from the originating user;
in case the account (310) of the destination user is not found in the data base (300),
means for forming an identifier for a session initialization protocol by concatenating the existing email address (104) of the destination user with a part identifying a second server by using an "@" sign to divide a first part and a second part of the identifier for a session initialization protocol;
means for accessing a data base of the second server to check, whether the second server has stored an account for the destination user having stored the email address of the destination user; and
in case an account for the destination user is found in the data base of the second server,
means for using a session initialization protocol to establish a call between the originating user and the destination user.

14. A method for initializing a connection between an originating user and a destination user, comprising:
a step (440) of sending at least a part of an email address (104) or at least a part of a telephone (204) number of the destination user to a server (100; 200);
a step (450) of receiving a message from the server (100; 200) having information indicating if the server has a user account (310) for the destination user, wherein the user account (310) of the destination user has the existing email address (104) or the existing telephone number (204) or at least parts thereof of the destination user within the account (310) as part of the account, which is to be used for identifying the user (102; 202) in case of a call for the user (102; 202), and a step (470) of receiving information from the destination user, whether the destination user is available.

15. Method according to claim 14, wherein before the step (440) of sending at least a part of an email address to the server (100; 200) two additional steps are performed:
a first additional step (400) using an existing email address (104) of a destination user as an identifier for the destination user for a session initiation protocol with a destination user;
a second additional step (410) comprising receiving a message indicating whether the session with the destination user can be initiated.

16. Method according to claim 14 or 15, wherein after the step (470) of receiving a message indicating that the destination user is not available, one additional step (480) is performed, the step using a telephone number (204) of the destination user stored within the account (310) as part (330) of the account, which is to be used for identifying the user (102; 202) in case of a call for the user (102; 202) to connect to a PSTN.

17. Method according to one of claims 14 - 16, in which the step (440) of sending at least a part of an email address to a server (100; 200) includes a step of addressing the server (100; 200) by concatenating at least a part of the email address (104) and a part identifying the server (100; 200) with an "@" sign dividing a first part and a second part of an identifier for a session initiation protocol.

18. Method according to claim 17, wherein the first part of the identifier for a session initiation protocol includes a true copy of an existing email address (104), the true copy of the email address including an "@" sign dividing a first part and a second part of the email address (104) and the second part of the identifier for a session initiation protocol includes a host name and a domain identifier divided by a "." sign.

19. Method according to one of claims 14 - 16, in which the step of sending at least a part of a telephone number (204) to a server (100; 200) includes the step of addressing the server (100; 200) by concatenating at least a part of the telephone number (204) and a part identifying the server (100; 200) with an "@"-sign dividing a first part and a second part of an identifier for a session initiation protocol.

20. Method according to claim 19, wherein the first part of the identifier for a session initiation protocol includes a telephone number (204) having a general user code and a specific user code and the second part of the identifier for a session initiation protocol includes a server (100; 200) name and a domain identifier divided by a "." sign.

21. Method for initializing a connection between an originating user and a destination user, comprising:
receiving a request from an originating user to connect a destination user, the request including at least a part of the telephone number or at least part of the email address of the destination user;
accessing a data base (300) having an account (310) for the destination user, wherein the user account (310) of the destination user has the existing email address (104) or the existing telephone number (204) or at least parts thereof of the destination user within the account (310) as part (330) of the account, which is to be used for identifying the user (102; 202) in case of a call for the user (102; 202);
identifying the destination user by comparing a part of the account (310) having stored at least part of an email address (104) or part of a telephone number (204) of the destination user and at least part of the email address or telephone number received from the originating user; and
sending a message to the destination user based on the account for the identified user.

22. Method according to claim 21, wherein the step of sending a message to the destination user is based on an IP address of the destination user stored in the account (310) of the destination user as part (340) of the account.

23. Method according to claim 21, wherein the step of sending a message to the destination user is based on trying to establish a call to the destination user by a PSTN using a telephone number (204) of the destination user stored in the account (310) of the destination user as part (330) of the account.

24. Computer program having a program code for performing the method in accordance with one of the preceding claims, when the computer program runs on a computer.

25. Apparatus for setting up an account for using a voice service, the apparatus comprising:
a device for receiving a registration request, including an telephone number (204) or an email address (104) belonging to a user (102; 202);
a device for creating the account (310) by storing the existing email address (104) or the existing telephone number (204) of the user (102; 202) or at least parts thereof within the account (310) as part of the account, which is to be used for identifying the user (102; 202) in case of a call for the user (102; 202).

26. Apparatus according to claim 25, the apparatus further comprising:
a device for generating a message to the user (102; 202) requesting the user (102; 202) to provide authentication information;
a device for receiving the authentication information from the user (102; 202); and
a device for authenticating the user (102; 202) using the authentication information received from the user (102; 202) to obtain a pass or a fail result of the authentication for the user (102; 202).

27. Apparatus for requesting a user account (310) for a voice service, comprising:
a device for sending a request for the user account (310), the request having an email address (104) or a telephone number (204) of the user (102; 202) to a server (100; 200); and
a device for receiving a message from the server (100; 200) having information from which the user (102; 202) can derive, whether a user account (310) has been successfully set-up by the server (100; 200), wherein
the user account (310) has the existing email address (104) or the existing telephone number (204) or at least parts thereof of the destination user within the account as part of the account (310), which is to be used for identifying the user in case of a call for the user (102; 202).

28. Apparatus according to claim 27, the apparatus further comprising:
a device receiving a message from the server (100; 200) asking for authentication information; and
a device sending the authentication information to the server (100; 200).

## Patentansprüche

1. Verfahren zum Initialisieren einer Verbindung zwischen einem Ursprungsbenutzer und einem Bestimmungsbenutzer mit:
Empfangen einer Anforderung von einem Ursprungsbenutzer, um eine Verbindung zu einem Bestimmungsbenutzer herzustellen, wobei die Anforderung die Telefonnummer des Bestimmungsbenutzers umfasst;
Zugreifen auf eine Datenbank (300), um zu prüfen, ob die Datenbank (300) ein Konto (310) aufweist, das für den Bestimmungsbenutzer gespeichert ist, wobei das gesuchte Benutzerkonto (310) des Bestimmungsbenutzers die existierende Telefonnummer (204) des Bestimmungsbenutzers in dem Konto (310) als einen Teil (330) des Kontos aufweist, der im Falle eines Anrufs für den Benutzer (102; 202) zum Identifizieren des Benutzers (102; 202) verwendet werden soll;
Identifizieren des Bestimmungsbenutzers durch ein Vergleichen des Teils des Kontos (310), der die Telefonnummer (204) des Bestimmungsbenutzers gespeichert aufweist, und der Telefonnummer des Bestimmungsbenutzers, die von dem Ursprungsbenutzer empfangen wird; und
Verwenden der empfangenen Telefonnummer (204) des Bestimmungsbenutzers, um einen Anruf an den Bestimmungsbenutzer über ein PSTN einzurichten, falls das Konto (310) des Bestimmungsbenutzers nicht in der Datenbank (300) gefunden wird;
Senden einer Nachricht an den Bestimmungsbenutzer basierend auf dem Konto für den identifizierten Benutzer und Empfangen einer Information von dem Bestimmungsbenutzer, ob der Bestimmungsbenutzer verfügbar ist, falls das Konto (310) des Bestimmungsbenutzers in der Datenbank (300) gefunden wird.

2. Verfahren gemäß Anspruch 1, bei dem das Empfangen der Telefonnummer (204) ein Empfangen einer Information aufweist, die eine Verkettung der Telefonnummer (204) und eines Teils aufweist, der einen Server (100; 200) mit einem "@"-Zeichen identifiziert, das einen ersten Teil und einen zweiten Teil eines Identifizierers für ein Sitzungsinitiierungsprotokoll teilt.

3. Verfahren gemäß Anspruch 2, bei dem der erste Teil des Identifizierers für ein Sitzungsinitiierungsprotokoll eine Telefonnummer (204) umfasst, die einen allgemeinen Benutzercode und einen spezifischen Benutzercode umfasst, und der zweite Teil des Identifizierers für ein Sitzungsinitiierungsprotokoll einen Server(100; 200)-Namen und einen Domäne-Identifizierer, der durch ein "."-Zeichen geteilt ist, aufweist.

4. Verfahren gemäß einem der Ansprüche 1 bis 3, bei dem der Schritt zum Senden einer Nachricht an den Bestimmungsbenutzer auf einer IP-Adresse des Bestimmungsbenutzers basiert, die in dem Konto (310) des Bestimmungsbenutzers als einen Teil (340) des Kontos gespeichert ist.

5. Verfahren gemäß einem der vorhergehenden Ansprüche, bei dem die empfangene Telefonnummer (204) des Bestimmungsbenutzers verwendet wird, um einen Anruf an den Bestimmungsbenutzer über ein PSTN einzurichten, falls die Information von dem Bestimmungsbenutzer anzeigt, dass der Bestimmungsbenutzer nicht verfügbar ist.

6. Verfahren gemäß einem der Ansprüche 1 bis 3, bei dem die empfangene Telefonnummer (204) des Bestimmungsbenutzers als ein Identifizierer für ein Sitzungsinitiierungsprotokoll mit dem Bestimmungsbenutzer verwendet wird, falls die Information von dem Bestimmungsbenutzer anzeigt, dass der Bestimmungsbenutzer verfügbar ist.

7. Computerprogramm mit einem Programmcode, der bewirkt, dass ein Computer das Verfahren gemäß einem der vorhergehenden Ansprüche durchführt, wenn das Computerprogramm auf dem Computer abläuft.

8. Vorrichtung zum Initialisieren einer Verbindung zwischen einem Ursprungsbenutzer und einem Bestimmungsbenutzer, wobei die Vorrichtung folgende Merkmale aufweist:
eine Einrichtung zum Empfangen einer Anforderung von einem Ursprungsbenutzer, um eine Verbindung zu einem Bestimmungsbenutzer herzustellen, wobei die Anforderung die Telefonnummer des Bestimmungsbenutzers umfasst;
eine Einrichtung zum Zugreifen auf eine Datenbank (300), um zu prüfen, ob die Datenbank (300) ein Konto (310) aufweist, das für den Bestimmungsbenutzer gespeichert ist, wobei das gesuchte Benutzerkonto (310) des Bestimmungsbenutzers die existierende Telefonnummer (204) des Bestimmungsbenutzers in dem Konto (310) als einen Teil (330) des Kontos aufweist, der im Falle eines Anrufs für den Benutzer (102; 202) zum Identifizieren des Benutzers (102; 202) verwendet werden soll;
eine Einrichtung zum Identifizieren des Bestimmungsbenutzers durch ein Vergleichen des Teils des Kontos (310), der die Telefonnummer (204) des Bestimmungsbenutzers gespeichert aufweist, und der Telefonnummer des Bestimmungsbenutzers, die von dem Ursprungsbenutzer empfangen wird;
eine Einrichtung zum Verwenden der empfangenen Telefonnummer (204) des Bestimmungsbenutzers, um einen Anruf an den Bestimmungsbenutzer über ein PSTN einzurichten, falls das Konto (310) des Bestimmungsbenutzers nicht in der Datenbank (300) gefunden wird;
eine Einrichtung zum Senden einer Nachricht an den Bestimmungsbenutzer basierend auf dem Konto für den identifizierten Benutzer und zum Empfangen einer Information von dem Bestimmungsbenutzer, ob der Bestimmungsbenutzer verfügbar ist, falls das Konto (310) des Bestimmungsbenutzers in der Datenbank (300) gefunden wird.

9. Vorrichtung gemäß Anspruch 8, bei der die Einrichtung zum Senden einer Nachricht an den Bestimmungsbenutzer eine IP-Adresse des Bestimmungsbenutzers verwendet, die in dem Konto (310) des Bestimmungsbenutzers als Teil (340) des Kontos gespeichert ist.

10. Vorrichtung gemäß Anspruch 8 oder 9, die eine Einrichtung zum Einrichten eines Anrufs an den Bestimmungsbenutzer über ein PSTN mit der empfangenen Telefonnummer (204) des Bestimmungsbenutzers aufweist, falls die Information von dem Bestimmungsbenutzer anzeigt, dass der Bestimmungsbenutzer nicht verfügbar ist.

11. Vorrichtung gemäß Anspruch 8, die eine Einrichtung zum Verwenden der empfangenen Telefonnummer (204) der Bestimmung als einen Identifizierer für ein Sitzungsinitiierungsprotokoll mit dem Bestimmungsbenutzer aufweist, falls die Information von dem Bestimmungsbenutzer anzeigt, dass der Bestimmungsbenutzer verfügbar ist.

12. Verfahren zum Initialisieren einer Verbindung zwischen einem Ursprungsbenutzer und einem Bestimmungsbenutzer mit:
Empfangen einer Anforderung von einem Ursprungsbenutzer, um eine Verbindung zu einem Bestimmungsbenutzer herzustellen, wobei die Anforderung eine existierende E-Mail-Adresse (104) des Bestimmungsbenutzers umfasst;
Zugreifen auf eine Datenbank (300), um zu prüfen, ob die Datenbank (300) ein Konto (310) für den Bestimmungsbenutzer gespeichert aufweist, wobei das gesuchte Benutzerkonto (310) des Bestimmungsbenutzers die existierende E-Mail-Adresse (104) des Bestimmungsbenutzers in dem Konto (310) als Teil (330) des Kontos aufweist, der in dem Falle eines Anrufs für den Benutzer (1.02; 202) zum Identifizieren des Benutzers (102; 202) verwendet werden soll;
Identifizieren des Bestimmungsbenutzers durch ein Vergleichen des Teils des Kontos (310), der die E-Mail-Adresse des Bestimmungsbenutzers gespeichert aufweist, und der E-Mail-Adresse des Bestimmungsbenutzers, die von dem Ursprungsbenutzer empfangen wird; und
falls das Konto (310) des Bestimmungsbenutzers nicht in der Datenbank (300) gefunden wird,
Bilden eines Identifizierers für ein Sitzungsinitiierungsprotokoll durch ein Verketten der existierenden E-Mail-Adresse (104) des Bestimmungsbenutzers mit einem Teil, der einen zweiten Server identifiziert, unter Verwendung eines "@"-Zeichens, um einen ersten Teil und einen zweiten Teil des Identifizierers für ein Sitzungsinitiierungsprotokoll zu teilen;
Zugreifen auf eine Datenbank des zweiten Servers, um zu prüfen, ob der zweite Server ein Konto für den Bestimmungsbenutzer gespeichert hat, das die E-Mail-Adresse des Bestimmungsbenutzers gespeichert hat; und
falls ein Konto für den Bestimmungsbenutzer in der Datenbank des zweiten Servers gefunden wird,
Verwenden eines Sitzungsinitiierungsprotokolls, um einen Anruf zwischen dem Ursprungsbenutzer und dem Bestimmungsbenutzer einzurichten.

13. Vorrichtung zum Initialisieren einer Verbindung zwischen einem Ursprungsbenutzer und einem Bestimmungsbenutzer mit:
einer Einrichtung zum Empfangen einer Anforderung von einem Ursprungsbenutzer, um eine Verbindung zu einem Bestimmungsbenutzer herzustellen, wobei die Anforderung eine existierende E-Mail-Adresse (104) des Bestimmungsbenutzers umfasst;
einer Einrichtung zum Zugreifen auf eine Datenbank (300), um zu prüfen, ob die Datenbank (300) ein Konto (310) für den Bestimmungsbenutzer gespeichert aufweist, wobei das gesuchte Benutzerkonto (310) des Bestimmungsbenutzers die existierende E-Mail-Adresse (104) des Bestimmungsbenutzers in dem Konto (310) als Teil (330) des Kontos aufweist, der im Falle eines Anrufs für den Benutzer (102; 202) zum Identifizieren des Benutzers (102; 202) verwendet werden soll;
einer Einrichtung zum Identifizieren des Bestimmungsbenutzers durch ein Vergleichen des Teils des Kontos (310), der die E-Mail-Adresse (204) des Bestimmungsbenutzers gespeichert hat, und der E-Mail-Adresse des Bestimmungsbenutzers, die von dem Ursprungsbenutzer empfangen wird;
falls das Konto (310) des Bestimmungsbenutzers nicht in der Datenbank (300) gefunden wird,
einer Einrichtung zum Bilden eines Identifizierers für ein Sitzungsinitiierungsprotokoll durch ein Verketten der existierenden E-Mail-Adresse (104) des Bestimmungsbenutzers mit einem Teil, der einen zweiten Server identifiziert, unter Verwendung eines "@"-Zeichens, um einen ersten Teil und einen zweiten Teil des Identifizierers für ein Sitzungsinitiierungsprotokoll zu teilen;
einer Einrichtung zum Zugreifen auf eine Datenbank des zweiten Servers, um zu prüfen, ob der zweite Server ein Konto für den Bestimmungsbenutzer gespeichert hat, das die E-Mail-Adresse des Bestimmungsbenutzers gespeichert hat; und
falls ein Konto für den Bestimmungsbenutzer in der Datenbank des zweiten Servers gefunden wird,
einer Einrichtung zum Verwenden eines Sitzungsinitiierungsprotokolls, um einen Anruf zwischen dem Ursprungsbenutzer und dem Bestimmungsbenutzer einzurichten.

14. Ein Verfahren zum Initialisieren einer Verbindung zwischen einem Ursprungsbenutzer und einem Bestimmungsbenutzer mit:
einem Schritt (440) zum Senden zumindest eines Teils einer E-Mail-Adresse (104) oder zumindest eines Teils einer Telefonnummer (204) des Bestimmungsbenutzers an einen Server (100; 200);
einem Schritt (450) zum Empfangen einer Nachricht von dem Server (100; 200), die eine Information aufweist, die anzeigt, ob der Server ein Benutzerkonto (310) für den Bestimmungsbenutzer aufweist, wobei das Benutzerkonto (310) des Bestimmungsbenutzers die existierende E-Mail-Adresse (104) oder die existierende Telefonnummer (204), oder zumindest Teile derselben, des Bestimmungsbenutzers in dem Konto (310) als Teil des Kontos aufweist, der im Falle eines Anrufs für den Benutzer (102; 202) zum Identifizieren des Benutzers (102; 202) verwendet werden soll, und einem Schritt (470) zum Empfangen einer Information von dem Bestimmungsbenutzer, ob der Bestimmungsbenutzer verfügbar ist.

15. Verfahren gemäß Anspruch 14, bei dem vor dem Schritt (440) zum Senden zumindest eines Teils einer E-Mail-Adresse an den Server (100; 200) zwei zusätzliche Schritte durchgeführt werden:
ein erster zusätzlicher Schritt (400), der eine existierende E-Mail-Adresse (104) eines Bestimmungsbenutzers als einen Identifizierer für den Bestimmungsbenutzer für ein Sitzungsinitiierungsprotokoll mit einem Bestimmungsbenutzer verwendet;
einen zweiten zusätzlichen Schritt (410), der ein Empfangen einer Nachricht aufweist, die anzeigt, ob die Sitzung mit dem Bestimmungsbenutzer initiiert werden kann.

16. Verfahren gemäß Anspruch 14 oder 15, bei dem nach dem Schritt (470) zum Empfangen einer Nachricht, die anzeigt, dass der Bestimmungsbenutzer nicht verfügbar ist, ein zusätzlicher Schritt (480) durchgeführt wird, wobei der Schritt eine Telefonnummer (204) des Bestimmungsbenutzers verwendet, die in dem Konto (310) als Teil (330) des Kontos gespeichert ist, der im Falle eines Anrufs für den Benutzer (102; 202) zum Identifizieren des Benutzers (102; 202) verwendet werden soll, um eine Verbindung mit einem PSTN herzustellen.

17. Verfahren gemäß einem der Ansprüche 14 bis 16, bei dem der Schritt (440) zum Senden zumindest eines Teils einer E-Mail-Adresse an einen Server (100; 200) einen Schritt zum Adressieren des Servers (100; 200) durch ein Verketten zumindest eines Teils der E-Mail-Adresse (104) und eines Teils, der den Server (100; 200) mit einem "@"-Zeichen identifiziert, das einen ersten Teil und einen zweiten Teil eines Identifizierers für ein Sitzungsinitiierungsprotokoll teilt, umfasst.

18. Verfahren gemäß Anspruch 17, bei dem der erste Teil des Identifizierers für ein Sitzungsinitiierungsprotokoll eine echte Kopie einer existierenden E-Mail-Adresse (104) umfasst, wobei die echte Kopie der E-Mail-Adresse ein "@"-Zeichen umfasst, das einen ersten Teil und einen zweiten Teil der E-Mail-Adresse (104) teilt, und der zweite Teil des Identifizierers für ein Sitzungsinitiierungsprotokoll einen Host-Namen und einen Domäne-Identifizierer umfasst, der durch ein "."-Zeichen geteilt ist.

19. Verfahren gemäß einem der Ansprüche 14 bis 16, bei dem der Schritt zum Senden zumindest eines Teils einer Telefonnummer (204) an einen Server (100; 200) den Schritt zum Adressieren des Servers (100; 200) durch ein Verketten zumindest eines Teils der Telefonnummer (204) und eines Teils, der den Server (100; 200) mit einem "@"-Zeichen identifiziert, das einen ersten Teil und einen zweiten Teil eines Identifizierers für ein Sitzungsinitiierungsprotokoll teilt, umfasst.

20. Verfahren gemäß Anspruch 19, bei dem der erste Teil des Identifizierers für ein Sitzungsinitiierungsprotokoll eine Telefonnummer (204) umfasst, die einen allgemeinen Benutzercode und einen spezifischen Benutzercode aufweist, und der zweite Teil des Identifizierers für ein Sitzungsinitiierungsprotokoll einen Server(100; 200)-Namen und einen Domäne-Identifizierer umfasst, der durch ein "."-Zeichen geteilt ist.

21. Verfahren zum Initialisieren einer Verbindung zwischen einem Ursprungsbenutzer und einem Bestimmungsbenutzer mit:
Empfangen einer Anforderung von einem Ursprungsbenutzer, um eine Verbindung zu einem Bestimmungsbenutzer herzustellen, wobei die Anforderung zumindest einen Teil der Telefonnummer oder zumindest einen Teil der E-Mail-Adresse des Bestimmungsbenutzers umfasst;
Zugreifen auf eine Datenbank (300), die ein Konto (310) für den Bestimmungsbenutzer aufweist, wobei das Benutzerkonto (310) des Bestimmungsbenutzers die existierende E-Mail-Adresse (104) oder die existierende Telefonnummer (204), oder zumindest Teile derselben, des Bestimmungsbenutzers in dem Konto (310) als einen Teil (330) des Kontos aufweist, der im Falle eines Anrufs für den Benutzer (102; 202) zum Identifizieren des Benutzers (102; 202) verwendet werden soll;
Identifizieren des Bestimmungsbenutzers durch ein Vergleichen eines Teils des Kontos (310), der zumindest einen Teil einer E-Mail-Adresse (104) oder einen Teil einer Telefonnummer (204) des Bestimmungsbenutzers gespeichert aufweist, und zumindest eines Teils der E-Mail-Adresse oder Telefonnummer, die von dem Ursprungsbenutzer empfangen wird; und
Senden einer Nachricht an den Bestimmungsbenutzer basierend auf dem Konto für den identifizierten Benutzer.

22. Verfahren gemäß Anspruch 21, bei dem der Schritt zum Senden einer Nachricht an den Bestimmungsbenutzer auf einer IP-Adresse des Bestimmungsbenutzers basiert, die in dem Konto (310) des Bestimmungsbenutzers als Teil (340) des Kontos gespeichert ist.

23. Verfahren gemäß Anspruch 21, bei dem der Schritt zum Senden einer Nachricht an den Bestimmungsbenutzer auf einem Versuch basiert, einen Anruf an den Bestimmungsbenutzer durch ein PSTN unter Verwendung einer Telefonnummer (204) des Bestimmungsbenutzers, die in dem Konto (310) des Bestimmungsbenutzers als Teil (330) des Kontos gespeichert ist, einzurichten.

24. Computerprogramm mit einem Programmcode zum Durchführen des Verfahrens gemäß einem der vorhergehenden Ansprüche, wenn das Computerprogramm auf einem Computer abläuft.

25. Vorrichtung zum Einstellen eines Kontos zum Verwenden eines Sprachdienstes, wobei die Vorrichtung folgende Merkmale aufweist:
ein Gerät zum Empfangen einer Registrierungsanforderung, einschließlich einer Telefonnummer (204) oder einer E-Mail-Adresse (104), die zu einem Benutzer (102; 202) gehört;
ein Gerät zum Erzeugen des Kontos (310) durch ein Speichern der existierenden E-Mail-Adresse (104) oder der existierenden Telefonnummer (204) des Benutzers (102; 202), oder zumindest von Teilen derselben, in dem Konto (310) als Teil des Kontos, der im Falle eines Anrufs für den Benutzer (102; 202) zum Identifizieren des Benutzers (102; 202) verwendet werden soll.

26. Vorrichtung gemäß Anspruch 25, wobei die Vorrichtung ferner folgende Merkmale aufweist:
ein Gerät zum Erzeugen einer Nachricht an den Benutzer (102; 202), die von dem Benutzer (102; 202) anfordert, eine Authentifizierungsinformation bereitzustellen;
ein Gerät zum Empfangen der Authentifizierungsinformation von dem Benutzer (102; 202); und
ein Gerät zum Authentifizieren des Benutzers (102; 202) unter Verwendung der Authentifizierungsinformation, die von dem Benutzer (102; 202) empfangen wird, um ein Bestanden- oder Fehlgeschlagen-Ergebnis der Authentifizierung für den Benutzer (102; 202) zu erhalten.

27. Vorrichtung zum Anfordern eines Benutzerkontos (310) für einen Sprachdienst mit:
einem Gerät zum Senden einer Anforderung für das Benutzerkonto (310) an einen Server (100; 200), wobei die Anforderung eine E-Mail-Adresse (104) oder eine Telefonnummer (204) des Benutzers (102; 202) aufweist; und
einem Gerät zum Empfangen einer Nachricht von dem Server (100; 200) mit einer Information, aus der der Benutzer (102; 202) ableiten kann, ob ein Benutzerkonto (310) erfolgreich durch den Server (100; 200) eingestellt worden ist, wobei das Benutzerkonto (310) die existierende E-Mail-Adresse (104) oder die existierende Telefonnummer (204), oder zumindest Teile derselben, des Bestimmungsbenutzers in dem Konto als Teil des Kontos (310) aufweist, der im Falle eines Anrufs für den Benutzer (102; 202) zum Identifizieren des Benutzers verwendet werden soll.

28. Vorrichtung gemäß Anspruch 27, wobei die Vorrichtung ferner folgende Merkmale aufweist:
ein Gerät, das eine Nachricht von dem Server (100; 200) empfängt, die eine Authentifizierungsinformation anfragt; und
ein Gerät, das die Authentifizierungsinformation an den Server (100; 200) sendet.

## Revendications

1. Procédé pour initialiser une connexion entre un utilisateur d'origine et un utilisateur de destination, comprenant:
recevoir une demande d'un utilisateur d'origine pour connecter un utilisateur de destination, la demande comportant le numéro de téléphone de l'utilisateur de destination;
accéder à une base de données (300) pour vérifier si la base de données (300) contient un compte (310) mémorisé pour l'utilisateur de destination, où le compte d'utilisateur recherché (310) de l'utilisateur de destination contient le numéro de téléphone existant (204) de l'utilisateur de destination dans le compte (310) comme partie (330) du compte qui doit être utilisée pour identifier l'utilisateur (102; 202) en cas d'un appel pour l'utilisateur (102; 202);
identifier l'utilisateur de destination en comparant la partie du compte (310) contenant y mémorisé le numéro de téléphone (204) de l'utilisateur de destination et le numéro de téléphone de l'utilisateur de destination reçu de l'utilisateur d'origine; et
au cas où le compte (310) de l'utilisateur de destination n'est pas trouvé dans la base de données (300), utiliser le numéro de téléphone reçu (204) de l'utilisateur de destination pour établir un appel à l'utilisateur de destination via un PSTN;
au cas où le compte (310) de l'utilisateur de destination est trouvé dans la base de données (300), envoyer un message à l'utilisateur de destination sur base du compte pour l'utilisateur identifié et recevoir des informations de l'utilisateur de destination pour savoir si l'utilisateur de destination est disponible.

2. Procédé selon la revendication 1, dans lequel le fait de recevoir le numéro de téléphone (204) comprend le fait de recevoir des informations comprenant un enchaînement du numéro de téléphone (204) et d'une partie identifiant un serveur (100; 200) avec un signe "@" séparant une première partie et une deuxième partie d'un identificateur pour un protocole d'initiation de session.

3. Procédé selon la revendication 2, dans lequel la première partie de l'identificateur pour un protocole d'initiation de session comporte un numéro de téléphone (204) présentant un code d'utilisateur général et un code d'utilisateur spécifique et la deuxième partie de l'identificateur pour un protocole d'initiation de session comporte un nom de serveur (100; 200) et un identificateur de domaine séparés par un signe ".".

4. Procédé selon l'une des revendications 1 à 3, dans lequel l'étape consistant à envoyer un message à l'utilisateur de destination est basée sur une adresse IP de l'utilisateur de destination mémorisée dans le compte (310) de l'utilisateur de destination comme partie (340) du compte.

5. Procédé selon l'une des revendications précédentes, dans lequel, au cas où les informations de l'utilisateur de destination indiquent que l'utilisateur de destination n'est pas disponible, le numéro de téléphone reçu (204) de l'utilisateur de destination est utilisé pour établir un appel à l'utilisateur de destination via un PSTN.

6. Procédé selon l'une des revendications 1 à 3, dans lequel, au cas où les informations de l'utilisateur de destination indiquent que l'utilisateur de destination est disponible, le numéro de téléphone reçu (204) de l'utilisateur de destination est utilisé comme identificateur pour un protocole d'initiation de session avec l'utilisateur de destination.

7. Programme d'ordinateur ayant un code de programme faisant réaliser par un ordinateur le procédé selon l'une des revendications précédentes lorsque le programme d'ordinateur est exécuté sur l'ordinateur.

8. Appareil pour initialiser une connexion entre un utilisateur d'origine et un utilisateur de destination, l'appareil comprenant:
un moyen destiné à recevoir une demande d'un utilisateur d'origine pour connecter un utilisateur de destination, la demande comportant le numéro de téléphone de l'utilisateur de destination;
un moyen destiné à accéder à une base de données (300) pour vérifier si la base de données (300) contient un compte (310) mémorisé pour l'utilisateur de destination, où le compte d'utilisateur recherché (310) de l'utilisateur de destination contient le numéro de téléphone existant (204) de l'utilisateur de destination dans le compte (310) comme partie (330) du compte qui doit être utilisée pour identifier l'utilisateur (102; 202) en cas d'un appel pour l'utilisateur (102; 202);
un moyen destiné à identifier l'utilisateur de destination en comparant la partie du compte (310) contenant y mémorisé le numéro de téléphone (204) de l'utilisateur de destination et le numéro de téléphone de l'utilisateur de destination reçu de l'utilisateur d'origine;
un moyen destiné, au cas où le compte (310) de l'utilisateur de destination n'est pas trouvé dans la base de données (300), à établir, à l'aide du numéro de téléphone reçu (204) de l'utilisateur de destination, un appel à l'utilisateur de destination via un PSTN;
un moyen destiné, au cas où le compte (310) de l'utilisateur de destination est trouvé dans la base de données (300), à envoyer un message à l'utilisateur de destination sur base du compte de l'utilisateur identifié et à recevoir des informations de l'utilisateur de destination pour savoir si l'utilisateur de destination est disponible.

9. Appareil selon la revendication 8, dans lequel le moyen destiné à envoyer un message à l'utilisateur de destination utilise une adresse IP de l'utilisateur de destination mémorisée dans le compte (310) de l'utilisateur de destination comme partie (340) du compte.

10. Appareil selon la revendication 8 ou 9, comprenant un moyen destiné, au cas où les informations de l'utilisateur de destination indiquent que l'utilisateur de destination n'est pas disponible, à établir un appel à l'utilisateur de destination via un PSTN avec le numéro de téléphone reçu (204) de l'utilisateur de destination.

11. Appareil selon la revendication 8, comprenant un moyen destiné, au cas où les informations de l'utilisateur de destination indiquent que l'utilisateur de destination est disponible, à utiliser le numéro de téléphone reçu (204) de la destination comme identificateur pour un protocole d'initiation de session avec l'utilisateur de destination.

12. Procédé pour initialiser une connexion entre un utilisateur d'origine et un utilisateur de destination, comprenant:
recevoir une demande d'un utilisateur d'origine pour connecter un utilisateur de destination, la demande comprenant une adresse électronique existante (104) de l'utilisateur de destination;
accéder à une base de données (300) pour vérifier si la base de données (300) contient un compte (310) mémorisé pour l'utilisateur de destination, où le compte d'utilisateur recherché (310) de l'utilisateur de destination contient l'adresse électronique existante (104) de l'utilisateur de destination dans le compte (310) comme partie (330) du compte qui doit être utilisée pour identifier l'utilisateur (102; 202) en cas d'un appel pour l'utilisateur (102; 202);
identifier l'utilisateur de destination en comparant la partie du compte (310) contenant y mémorisée l'adresse électronique de l'utilisateur de destination et l'adresse électronique de l'utilisateur de destination reçue de l'utilisateur d'origine; et
au cas où le compte (310) de l'utilisateur de destination n'est pas trouvé dans la base de données (300),
former un identificateur pour un protocole d'initialisation de session en enchaînant l'adresse électronique existante (104) de l'utilisateur de destination avec une partie identifiant un deuxième serveur à l'aide d'un signe "@" pour séparer une première partie et une deuxième partie de l'identificateur pour un protocole d'initialisation de session;
accéder à une base de données du deuxième serveur pour vérifier si le deuxième serveur a mémorisé un compte pour l'utilisateur de destination contenant y mémorisée l'adresse électronique de l'utilisateur de destination; et
au cas où un compte pour l'utilisateur de destination est trouvé dans la base de données du deuxième serveur,
utiliser un protocole d'initialisation de session pour établir un appel entre l'utilisateur d'origine et l'utilisateur de destination.

13. Appareil pour initialiser une connexion entre un utilisateur d'origine et un utilisateur de destination, l'appareil comprenant:
un moyen destiné à recevoir une demande d'un utilisateur d'origine pour connecter un utilisateur de destination, la demande comportant une adresse électronique existante (104) de l'utilisateur de destination;
un moyen destiné à accéder à une base de données (300) pour vérifier si la base de données (300) contient un compte (310) mémorisé pour l'utilisateur de destination, où le compte d'utilisateur recherché (310) de l'utilisateur de destination contient l'adresse électronique existante (104) de l'utilisateur de destination dans le compte (310) comme partie (330) du compte qui doit être utilisée pour identifier l'utilisateur (102; 202) en cas d'un appel pour l'utilisateur (102; 202);
un moyen destiné à identifier l'utilisateur de destination en comparant la partie du compte (310) présentant y mémorisée l'adresse électronique (204) de l'utilisateur de destination et l'adresse électronique de l'utilisateur de destination reçue de l'utilisateur d'origine;
au cas où le compte (310) de l'utilisateur de destination n'est pas trouvé dans la base de données (300),
un moyen destiné à former un identificateur pour un protocole d'initialisation de session en enchaînant l'adresse électronique existante (104) de l'utilisateur de destination avec une partie identifiant un deuxième serveur à l'aide d'un signe "@" pour séparer une première partie et une deuxième partie de l'identificateur pour un protocole d'initialisation de session;
un moyen destiné à accéder à une base de données du deuxième serveur pour vérifier si le deuxième serveur a mémorisé un compte pour l'utilisateur de destination contenant y mémorisée l'adresse électronique de l'utilisateur de destination; et
au cas où un compte pour l'utilisateur de destination est trouvé dans la base de données du deuxième serveur,
un moyen destiné à utiliser un protocole d'initialisation de session pour établir un appel entre l'utilisateur d'appel et l'utilisateur de destination.

14. Procédé pour initialiser une connexion entre un utilisateur d'origine et un utilisateur de destination, comprenant:
une étape (440) consistant à envoyer au moins une partie d'une adresse électronique (104) ou au moins une partie d'un numéro de téléphone (204) de l'utilisateur de destination à un serveur (100; 200);
une étape (450) consistant à recevoir un message du serveur (100; 200) présentant des informations indiquant si le serveur a un compte d'utilisateur (310) pour l'utilisateur de destination, où le compte d'utilisateur (310) de l'utilisateur de destination contient l'adresse électronique existante (104) ou le numéro de téléphone existant (204), ou au moins des parties de ceux-ci, de l'utilisateur de destination dans le compte (310) comme partie du compte qui doit être utilisée pour identifier l'utilisateur (102; 202) en cas d'un appel pour l'utilisateur (102; 202), et une étape (470) consistant à recevoir des informations de l'utilisateur de destination pour savoir si l'utilisateur de destination est disponible.

15. Procédé selon la revendication 14, dans lequel sont effectuées, avant l'étape (440) consistant à envoyer au moins une partie d'une adresse électronique au serveur (100; 200), deux étapes additionnelles:
une première étape additionnelle (400) utilisant une adresse électronique existante (104) d'un utilisateur de destination comme identificateur pour l'utilisateur de destination pour un protocole d'initiation de session avec un utilisateur de destination;
une deuxième étape additionnelle (410) comprenant le fait de recevoir un message indiquant si la session avec l'utilisateur de destination peut être initiée.

16. Procédé selon la revendication 14 ou 15, dans lequel est effectuée, après l'étape (470) consistant à recevoir un message indiquant que l'utilisateur de destination n'est pas disponible, une étape additionnelle (480), l'étape utilisant un numéro de téléphone (204) de l'utilisateur de destination mémorisé dans le compte (310) comme partie (330) du compte qui doit être utilisée pour identifier l'utilisateur (102; 202) en cas d'un appel pour l'utilisateur (102; 202) à connecter à un PSTN.

17. Procédé selon l'une des revendications 14 à 16, dans lequel l'étape (440) consistant à envoyer au moins une partie d'une adresse électronique à un serveur (100; 200) comporte une étape consistant à s'adresser au serveur (100; 200) en enchaînant au moins une partie de l'adresse électronique (104) et une partie identifiant le serveur (100; 200) avec un signe "@" séparant une première partie et une deuxième partie d'un identificateur pour un protocole d'initiation de session.

18. Procédé selon la revendication 17, dans lequel la première partie de l'identificateur pour un protocole d'initiation de session comporte une copie réelle d'une adresse électronique existante (104), la copie réelle de l'adresse électronique comportant un signe "@" séparant une première partie et une deuxième partie de l'adresse électronique (104) et la deuxième partie de l'identificateur pour un protocole d'initiation de session comportant un nom d'hôte et un identificateur de domaine séparés par un signe ".".

19. Procédé selon l'une des revendications 14 à 16, dans lequel l'étape consistant à envoyer au moins une partie d'un numéro de téléphone (204) à un serveur (100; 200) comporte l'étape consistant à adresser le serveur (100; 200) en enchaînant au moins une partie du numéro de téléphone (204) et une partie identifiant le serveur (100; 200) avec un signe "@" séparant une première partie et une deuxième partie d'un identificateur pour un protocole d'initiation de session.

20. Procédé selon la revendication 19, dans lequel la première partie de l'identificateur pour un protocole d'initiation de session comporte un numéro de téléphone (204) présentant un code d'utilisateur général et un code d'utilisateur spécifique et la deuxième partie de l'identificateur pour un protocole d'initiation de session comporte un nom de serveur (100; 200) et un identificateur de domaine séparés par un signe ".".

21. Procédé pour initialiser une connexion entre un utilisateur d'origine et un utilisateur de destination, comprenant:
recevoir une demande d'un utilisateur d'origine pour connecter un utilisateur de destination, la demande comportant au moins une partie du numéro de téléphone ou au moins une partie de l'adresse électronique de l'utilisateur de destination;
accéder à une base de données (300) contenant un compte (310) pour l'utilisateur de destination, où le compte d'utilisateur (310) de l'utilisateur de destination contient l'adresse électronique existante (104) ou le numéro de téléphone existant (204), ou au moins des parties de ceux-ci, de l'utilisateur de destination dans le compte (310) comme partie (330) du compte qui doit être utilisée pour identifier l'utilisateur (102; 202) en cas d'un appel pour l'utilisateur (102; 202);
identifier l'utilisateur de destination en comparant une partie du compte (310) présentant y mémorisé au moins une partie d'une adresse électronique (104) ou une partie d'un numéro de téléphone (204) de l'utilisateur de destination et au moins une partie de l'adresse électronique ou du numéro de téléphone reçu de l'utilisateur d'origine; et
envoyer un message à l'utilisateur de destination sur base du compte pour l'utilisateur identifié.

22. Procédé selon la revendication 21, dans lequel l'étape consistant à envoyer un message à l'utilisateur de destination est basée sur une adresse IP de l'utilisateur de destination mémorisée dans le compte (310) de l'utilisateur de destination comme partie (340) du compte.

23. Procédé selon la revendication 21, dans lequel l'étape consistant à envoyer un message à l'utilisateur de destination est basée sur le fait d'essayer d'établir un appel à l'utilisateur de destination par un PSTN à l'aide d'un numéro de téléphone (204) de l'utilisateur de destination mémorisé dans le compte (310) de l'utilisateur de destination comme partie (330) du compte.

24. Programme d'ordinateur ayant un code de programme pour réaliser le procédé selon l'une des revendications précédentes lorsque le programme d'ordinateur est exécuté sur un ordinateur.

25. Appareil pour établir un compte à l'aide d'un service de téléphonie vocale, l'appareil comprenant:
un dispositif destiné à recevoir une demande d'enregistrement, y compris un numéro de téléphone (204) ou une adresse électronique (104) appartenant à un utilisateur (102; 202);
un dispositif destiné à créer le compte (310) en mémorisant l'adresse électronique existante (104) ou le numéro de téléphone existant (204) de l'utilisateur (102; 202), ou au moins des parties de ceux-ci, dans le compte (310) comme partie du compte qui doit être utilisée pour identifier l'utilisateur (102; 202) en cas d'un appel pour l'utilisateur (102; 202).

26. Appareil selon la revendication 25, l'appareil comprenant par ailleurs:
un dispositif destiné à générer un message à l'utilisateur (102; 202) demandant à l'utilisateur (102; 202) de fournir des informations d'authentification;
un dispositif destiné à recevoir les informations d'authentification de l'utilisateur (102; 202); et
un dispositif destiné à authentifier l'utilisateur (102; 202) à l'aide des informations d'authentification reçues de l'utilisateur (102; 202), pour obtenir un résultat de passage ou d'échec de l'authentification pour l'utilisateur (102; 202).

27. Appareil pour demander un compte d'utilisateur (310) pour un service de téléphonie vocale, comprenant:
un dispositif destiné à envoyer une demande de compte d'utilisateur (310), la demande présentant une adresse électronique (104) ou un numéro de téléphone (204) de l'utilisateur (102; 202) à un serveur (100; 200); et
un dispositif destiné à recevoir un message du serveur (100; 200) contenant les informations à partir desquelles l'utilisateur (102; 202) peut dériver si un compte d'utilisateur (310) a été établi avec succès par le serveur (100; 200), où le compte d'utilisateur (310) contient l'adresse électronique existante (104) ou le numéro de téléphone existant (204), ou au moins des parties de ceux-ci, de l'utilisateur de destination dans le compte comme partie du compte (310) qui doit être utilisée pour identifier l'utilisateur en cas d'un appel pour l'utilisateur (102; 202).

28. Appareil selon la revendication 27, l'appareil comprenant par ailleurs:
un dispositif recevant un message du serveur (100; 200) demandant des informations d'authentification; et
un dispositif envoyant les informations d'authentification au serveur (100; 200).
